# EUROPÄISCHE PATENTANMELDUNG

(11) **EP 4 749 774 A1**
(43) Veröffentlichungstag der Anmeldung: **27.05.2026**
(21) Anmeldenummer: 24215172.8
(22) Anmeldetag: 25.11.2024
(51) Int. Cl.: H01M 50/103, H01M 50/609, H01M 50/627, H01M 50/673, H01M 50/618

(54) **VERFAHREN ZUM BEFÜLLEN EINER PRISMATISCHEN BATTERIEZELLE**

(71) Anmelder: STIWA Automation GmbH, 4800 Attnang-Puchheim (AT)
(72) Erfinder: PUCHER, Alexander, 4902 Wolfsegg am Hausruck (AT); VORHAUER, Julia, 4852 Weyregg am Attersee (AT); ZIERLER, Florian, 4810 Gmunden (AT)
(74) Vertreter: Burger, Hannes Alfred

(57) **Zusammenfassung**

Die Offenbarung betrifft ein Verfahren zum Befüllen einer prismatischen Batteriezelle (1) mit Elektrolyt (6), das Verfahren umfassend die Verfahrensschritte:

- Bereitstellen einer Befüllvorrichtung (11) umfassend:

+ einen Aufnahmebehälter (12) mit einem Behälterinnenraum (13) zur Aufnahme der Batteriezelle (1);

+ einen Deckel (16);

+ eine im Behältergehäuse (14) oder im Deckel (16) angeordnete Gasdurchtrittsöffnung (18);

+ eine Vakuumpumpe (19);

+ eine im Behältergehäuse (14) angeordnete Fülllanze (22);

- Bereitstellen der Batteriezelle (1) mit einem Batteriezellengehäuse (2) und einem darin ausgebildeten Batteriezelleninnenraum (3), sowie einer im Batteriezellengehäuse (2) angeordneten Befüllausnehmung (9);

- Einsetzen der Batteriezelle (1) in den Behälterinnenraum (13);

- Gasdichtes Verschließen der Einsetzöffnung (15) des Aufnahmebehälters (12) mittels des Deckels (16);

- Herstellen eines Behälterinnenraumdruckes im Behälterinnenraum (13);

- Heranführen und anpressen der Fülllanze (22) und der Befüllausnehmung (9) der Batteriezelle (1) zueinander;

- Einbringen einer vorbestimmten Menge des Elektrolyt (6) in den Batteriezelleninnenraum (3) mittels der Fülllanze (22).

## Beschreibung

Die Erfindung betrifft ein Verfahren zum Befüllen einer prismatischen Batteriezelle mit Elektrolyt, sowie eine Befüllvorrichtung zum Befüllen der prismatischen Batteriezelle.

Die US9692081B2 offenbart ein Verfahren zum Befüllen einer prismatischen Batteriezelle mit Elektrolyt, sowie eine Befüllvorrichtung. Das Befüllverfahren weist mehrere Prozessschritte auf. Die Befüllvorrichtung nimmt dabei mehrere Batteriezellen gleichzeitig auf.

Aufgabe der vorliegenden Erfindung war es, die Nachteile des Standes der Technik zu überwinden und ein verbessertes Verfahren zum Befüllen einer prismatischen Batteriezelle mit Elektrolyt, sowie eine verbesserte Befüllvorrichtung zur Verfügung zu stellen.

Diese Aufgabe wird durch ein Verfahren und eine Vorrichtung gemäß den Ansprüchen gelöst.

Erfindungsgemäß ist ein Verfahren zum Befüllen einer prismatischen Batteriezelle mit Elektrolyt vorgesehen. Das Verfahren umfasst die Verfahrensschritte:
- Bereitstellen einer Befüllvorrichtung umfassend:
   + einen Aufnahmebehälter mit einem Behälterinnenraum zur Aufnahme der Batteriezelle, wobei der Behälterinnenraum von einem Behältergehäuse umgeben ist, welches zumindest eine Einsetzöffnung zum Einsetzen und zur Entnahme der Batteriezelle aus dem Behälterinnenraum aufweist;
   + einen Deckel zum gasdichten Verschließen der Einsetzöffnung im Aufnahmebehälter;
   + eine im Behältergehäuse oder im Deckel angeordnete Gasdurchtrittsöffnung;
   + eine Vakuumpumpe, welche mit der Gasdurchtrittsöffnung strömungsverbunden ist;
   + eine im Behältergehäuse oder im Deckel angeordnete Fülllanze zum Einbringen eines Elektrolyt in das Innere der Batteriezelle, wobei die Fülllanze separat zur Gasdurchtrittsöffnung ausgebildet ist;
- Bereitstellen der Batteriezelle mit einem Batteriezellengehäuse und einem darin ausgebildeten Batteriezelleninnenraum, sowie einer im Batteriezellengehäuse angeordneten Befüllausnehmung;
- Einsetzen der Batteriezelle in den Behälterinnenraum des Aufnahmebehälters durch die Einsetzöffnung, wobei die Batteriezelle so im Behälterinnenraum positioniert wird, dass die Befüllausnehmung der Batteriezelle im Bereich der Fülllanze liegt;
- Gasdichtes Verschließen der Einsetzöffnung des Aufnahmebehälters mittels des Deckels;
- Herstellen eines Behälterinnenraumdruckes im Behälterinnenraum, welcher geringer ist als der Umgebungsdruck mittels der Vakuumpumpe, wobei sich der Batteriezelleninnenraumdruck im Batteriezelleninnenraum an den Behälterinnenraumdruck anpasst;
- Heranführen und anpressen der Fülllanze und der Befüllausnehmung der Batteriezelle zueinander, wobei der Batteriezelleninnenraum der Batteriezelle mittels der Fülllanze gasdicht zum Behälterinnenraum abgeschlossen wird;
- Einbringen einer vorbestimmten Menge des Elektrolyt in den Batteriezelleninnenraum mittels der Fülllanze.

Das erfindungsgemäße Verfahren bringt den Vorteil mit sich, dass mittels der einzelnen Verfahrensschritte eine prismatische Batteriezelle einfach mit Elektrolyt befüllt werden kann. Insbesondere bei prismatischen Batteriezellen führt ein Unterschied zwischen Innendruck und Außendruck der Batteriezelle zu einer elastischen bzw. bei großer Druckdifferenz auch zu einer plastischen Verformung des Batteriezellengehäuses. Um diese plastische Verformung zu vermeiden, wird im Stand der Technik ein komplexer mehrstufiger Befüllvorgang durchgeführt. Durch die erfindungsgemäßen Verfahrensschritte kann der Befüllvorgang beschleunigt werden und gleichzeitig eine unterwünschte plastische Verformung des Batteriezellengehäuses vermieden werden. Eine zwischenzeitige elastische Verformung des Batteriezellengehäuses wird dabei in Kauf genommen bzw. kann die Elastizität des Batteriezellengehäuses genutzt werden, um während dem Befüllvorgang den Batteriezelleninnenraum mit ausreichend Elektrolyt zu befüllen, sodass das Elektrolyt in die Zwischenräume zwischen Kathode, Separator und Anode eindringen kann. Insbesondere kann durch das erfindungsgemäße Verfahren erreicht werden, dass im Vergleich zum Stand der Technik nur ein einzelner Befüllvorgang notwendig ist. Somit kann eine wesentliche Steigerung der Taktung beim Befüllvorgang erreicht werden, da die Durchlaufzeit verringert werden kann.

Weiters kann es zweckmäßig sein, wenn beim Herstellen des Behälterinnenraumdruckes im Behälterinnenraum, welcher geringer ist als der Umgebungsdruck, der Behälterinnenraumdruck auf einen Wert zwischen 20mbar und 500mbar, insbesondere zwischen 30mbar und 300mbar, bevorzugt zwischen 45mbar und 55mbar gebracht wird. Dies bringt den Vorteil mit sich, dass besonders bei einem derart gewählten Behälterinnenraumdruck ein effizienter Befüllvorgang erreicht werden kann.

Die angegebenen Drücke für Behälterinnenraumdruck und Umgebungsdruck sind Absolut-Drücke. Der Standardumgebungsdruck beträgt somit in etwa 1013,25 hPa auf Meereshöhe. Je nach Aufstellungsbedingungen, wie etwa Meereshöhe, Außentemperatur usw. ist dieser Standardumgebungsdruck somit nicht konstant.

Ferner kann vorgesehen sein, dass vor dem Einbringen einer vorbestimmten Menge des Elektrolyt in den Batteriezelleninnenraum folgender Verfahrensschritt durchgeführt wird:
- Erhöhen des Behälterinnenraumdruckes oder kompletter Druckausgleich des Behälterinnenraumdruckes mit dem Umgebungsdruck, wobei durch den gasdichten Abschluss des Batteriezelleninnenraumes der Batteriezelleninnenraumdruck geringer ist als der Behälterinnenraumdruck. Durch diese Maßnahme kann erreicht werden, dass während des Befüllvorganges außerhalb des Batteriezellengehäuses ein höherer Druck ausgebildet ist, als im Batteriezelleninnenraum. Somit kann das Elektrolyt mit Druck in den Batteriezelleninnenraum eingebraucht werden, wobei beim Einbringen des Elektrolyts in den Batteriezelleninnenraum aufgrund des außerhalb des Batteriezellengehäuses anliegenden höheren Druckes einer etwaigen Ausbauchung des Batteriezellengehäuses entgegenwirkt wird bzw. die Ausbauchung des Batteriezellengehäuses vermindert wird.

Darüber hinaus kann vorgesehen sein, dass der Behälterinnenraum während des Befüllvorganges mit einem Prozessgas, insbesondere Stickstoff, beaufschlagt wird, wobei das Beaufschlagen des Behälterinnenraumes mit dem Prozessgas erst erfolgt, wenn die Fülllanze an die Befüllausnehmung angepresst ist. Dies bringt den Vorteil mit sich, dass durch diese Merkmale der Befüllprozess verbessert werden kann. Insbesondere kann durch diese Maßnahme erreicht werden, dass das Prozessgas nicht in den Batteriezelleninnenraum gelangt. Mittels des Prozessgases Stickstoff kann im Behälterinnenraum während des Befüllvorganges eine Explosionsgeschützte Atmosphäre hergestellt werden. Bei herkömmlichen Befüllprozessen wird im Gegensatz dazu das Prozessgas auch in den Batteriezelleninnenraum eingebracht. Der hierbei verwendete Stickstoff kann in das Elektrolyt hineindiffundieren, wodurch es notwendig sein kann, in einem weiteren nachgelagerten Verfahrensschritt den Stickstoff aus dem Elektrolyt zu extrahieren und gegebenenfalls einen weiteren Befüllvorgang vorzunehmen.

Weiters ist es auch denkbar, dass Trockenluft als Prozessgas verwendet wird. Die Verwendung von Trockenluft als Prozessgas bringt den Vorteil mit sich, dass diese einfach und effizient in großer Menge zur Verfügung gestellt werden kann.

Beispielsweise ist es denkbar, dass Stickstoff als Prozessgas eingesetzt wird, wenn das verwendete Elektrolyt einen niedrigen Flammpunkt aufweist und somit eine Explosionsgefahr besteht. Weiters ist es denkbar, dass Trockenluft als Prozessgas eingesetzt wird, wenn das verwendete Elektrolyt einen hohen Flammpunkt aufweist und somit die Explosionsgefahr gering ist.

In einem weiteren Ausführungsbeispiel ist es auch denkbar, dass weitere Arten von Gas als Prozessgas verwendet werden.

Vorteilhaft ist auch eine Ausprägung, gemäß welcher vorgesehen sein kann, dass während des Einbringens des Elektrolyt in den Batteriezelleninnenraum, der Behälterinnenraumdruck gegenüber dem Umgebungsdruck erhöht wird. Dies bringt den Vorteil mit sich, dass durch diese Maßnahme mit steigender Elektrolytfüllung und somit steigendem Innendruck im Batteriezelleninnenraum ein Druckausgleich geschaffen werden kann. Durch diese Maßnahme kann ein übermäßiges Ausbauchen der Batteriezelle während des Befüllvorganges vermieden werden.

Gemäß einer Weiterbildung ist es möglich, dass während des Einbringens des Elektrolyt in den Batteriezelleninnenraum, der Behälterinnenraumdruck auf einen Wert zwischen 1200mbar und 6000mbar, insbesondere zwischen 1250mbar und 4000mbar, bevorzugt zwischen 1300mbar und 3000mbar erhöht wird. Besonders in einem derartigen Druckbereich lässt sich ein gutes Füllergebnis erzielen.

Ferner kann es zweckmäßig sein, wenn beim Einbringen des Elektrolyt in den Batteriezelleninnenraum, das Elektrolyt in den Batteriezelleninnenraum mit einem Befülldruck zwischen 2000mbar und 13000mbar, insbesondere zwischen 6000mbar und 12000mbar, bevorzugt zwischen 8000mbar und 10000mbar eingebracht wird. Besonders in einem derartigen Druckbereich lässt sich ein gutes Füllergebnis erzielen.

Darüber hinaus kann vorgesehen sein, dass beim Einbringen des Elektrolyt in den Batteriezelleninnenraum, der Befülldruck zwischen 20mbar und 10000mbar, insbesondere zwischen 40mbar und 6000mbar, bevorzugt zwischen 500mbar und 2000mbar höher ist, als der Behälterinnenraumdruck. Besonders in einem derartigen Druckbereich lässt sich ein gutes Füllergebnis erzielen.

Weiters kann es zweckmäßig sein, wenn während des Befüllvorganges der Behälterinnenraumdruck laufend an den Befülldruck angepasst wird. Dies bringt den Vorteil mit sich, dass durch diese Maßnahme eine konstante Druckdifferenz zwischen dem Batteriezelleninnenraum und der Umgebung aufrechterhalten werden kann.

Ferner kann vorgesehen sein, dass nach Beendigung des Befüllvorganges die Fülllanze gereinigt wird, bevor ein neuer Befüllzyklus gestartet wird. Dies bringt den Vorteil mit sich, dass durch diese Maßnahme die Lebensdauer der Befüllvorrichtung erhöht werden kann.

Darüber hinaus kann vorgesehen sein, dass die vorbestimmte Menge des Elektrolyt mittels einer Füllpumpe in den Batteriezelleninnenraum eingebracht wird, wobei die Dosierung der vorbestimmten Menge des Elektrolyt mittels einer Dosierpumpe erfolgt, welche die vorbestimmte Menge des Elektrolyt in die Füllpumpe hineindosiert. Dies bringt den Vorteil mit sich, dass durch diese Maßnahme die Füllpumpe für eine effiziente Befüllung mit ausreichend hohem Druck und innerhalb kurzer Zeit ausgebildet sein kann. Gleichzeitig kann die Dosierpumpe für eine exakte Mengendosierung ausgebildet sein.

Weiters kann vorgesehen sein, dass die Füllpumpe in Form einer Kolbenpumpe ausgebildet ist.

Weiters kann vorgesehen sein, dass die Dosierpumpe in Form einer Kolbenpumpe ausgebildet ist. Besonders Kolbenpumpen sind für die vorgesehenen Einsatzzwecke gut geeignet.

Die Erfindung betrifft außerdem eine Befüllvorrichtung zum Befüllen einer prismatischen Batteriezelle mit einem Elektrolyt. Die Befüllvorrichtung umfasst:
- einen Aufnahmebehälter mit einem Behälterinnenraum zur Aufnahme der Batteriezelle, wobei der Behälterinnenraum von einem Behältergehäuse umgeben ist, welches zumindest eine Einsetzöffnung zum Einsetzen und zur Entnahme der Batteriezelle aus dem Behälterinnenraum aufweist;
- einen Deckel zum gasdichten Verschließen der Einsetzöffnung im Aufnahmebehälter;
- eine im Behältergehäuse oder im Deckel angeordnete Gasdurchtrittsöffnung;
- eine Vakuumpumpe, welche mit der Gasdurchtrittsöffnung strömungsverbunden ist;
- eine im Behältergehäuse oder im Deckel angeordnete Fülllanze zum Einbringen eines Elektrolyt in das Innere der Batteriezelle, wobei die Fülllanze separat zur Gasdurchtrittsöffnung ausgebildet ist.

Die erfindungsgemäße Befüllvorrichtung weist den Vorteil auf, dass mittels der einzelnen Verfahrensschritte eine prismatische Batteriezelle einfach mit Elektrolyt befüllt werden kann. Insbesondere bei prismatischen Batteriezellen führt ein Unterschied zwischen Innendruck und Außendruck der Batteriezelle zu einer elastischen bzw. bei großer Druckdifferenz auch zu einer plastischen Verformung des Batteriezellengehäuses führen. Um diese plastische Verformung zu vermeiden, wird im Stand der Technik ein komplexer oft mehrstufiger Befüllvorgang durchgeführt. Durch die erfindungsgemäßen Verfahrensschritte kann der Befüllvorgang beschleunigt werden und gleichzeitig eine unterwünschte plastische Verformung des Batteriezellengehäuses vermieden werden. Eine zwischenzeitige elastische Verformung des Batteriezellengehäuses wird dabei in Kauf genommen bzw. kann die Elastizität des Batteriezellengehäuses genutzt werden, um während dem Befüllvorgang den Batteriezelleninnenraum mit ausreichend Elektrolyt zu befüllen, sodass das Elektrolyt in die Zwischenräume zwischen Kathode, Separator und Anode eindringen kann. Insbesondere kann durch das erfindungsgemäße Verfahren erreicht werden, dass im Vergleich zum Stand der Technik nur ein einzelner Befüllvorgang notwendig ist. Somit kann eine wesentliche Steigerung der Taktung beim Befüllvorgang erreicht werden, da die Durchlaufzeit verringert werden kann.

Gemäß einer Weiterbildung ist es möglich, dass die Fülllanze mit einer Füllpumpe gekoppelt ist, welche zum Einbringen einer vorbestimmten Menge des Elektrolyt in den Batteriezelleninnenraum ausgebildet ist und dass eine Dosierpumpe ausgebildet ist, welche zur Dosierung der vorbestimmten Menge des Elektrolyt in die Füllpumpe dient. Dies bringt den Vorteil mit sich, dass durch diese Maßnahme die Füllpumpe für eine effiziente Befüllung mit ausreichend hohem Druck und innerhalb kurzer Zeit ausgebildet sein kann. Gleichzeitig kann die Dosierpumpe für eine exakte Mengendosierung ausgebildet sein.

Weiters kann vorgesehen sein, dass die Fülllanze mit einem Elektrolytanschluss gekoppelt ist. Der Elektrolytanschluss kann mittels einer Elektrolytzuleitung mit einer Füllpumpe gekoppelt sein.

Insbesondere kann vorgesehen sein, dass die Füllpumpe einen Füllpumpenzylinder aufweist. Im Füllpumpenzylinder kann ein Füllpumpenkolben verschiebbar angeordnet sein. Insbesondere kann vorgesehen sein, dass vom Füllpumpenzylinder und vom Füllpumpenkolben ein Elektrolytaufnahmeraum begrenzt ist. Der Elektrolytaufnahmeraum kann mit einem Füllpumpeneinlass und einem Füllpumpenauslass strömungsgekoppelt sein.

Insbesondere kann vorgesehen sein, dass im Bereich des Füllpumpeneinlasses ein Rückschlagventil ausgebildet ist.

Weiters kann vorgesehen sein, dass im Füllpumpenzylinder eine vordere Füllpumpendichtung und eine hintere Dosierpumpendichtung ausgebildet ist. Die vordere Füllpumpendichtung und die hintere Füllpumpendichtung können mit dem Füllpumpenkolben zusammenwirken. Weiters kann vorgesehen sein, dass zwischen der vorderen Füllpumpendichtung und der hinteren Füllpumpendichtung eine Füllpumpenspülung ausgebildet ist. Die Füllpumpenspülung kann vorzugsweise als "Wet Cup" ausgebildet sein. Insbesondere kann vorgesehen sein, dass die Füllpumpenspülung einen von einer Flüssigkeit durchströmten Bereich aufweist. Durch diese Dosierpumpenspülung kann ein Kristallisieren des Elektrolyts am Füllpumpenkolben weitestgehend vermieden werden, wodurch die Lebensdauer der Dosierpumpe erhöht werden kann.

Weiters kann vorgesehen sein, dass die Befüllvorrichtung eine Dosierpumpe aufweist. Insbesondere kann vorgesehen sein, dass die Dosierpumpe einen Dosierpumpenzylinder aufweist. Im Dosierpumpenzylinder kann ein Dosierpumpenkolben verschiebbar angeordnet sein. Insbesondere kann vorgesehen sein, dass vom Dosierpumpenzylinder und vom Dosierpumpenkolben ein Elektrolytaufnahmeraum begrenzt ist. Der Elektrolytaufnahmeraum kann mit einem Dosierpumpeneinlass und einem Dosierpumpenauslass strömungsgekoppelt sein. Insbesondere kann vorgesehen sein, dass im Bereich des Dosierpumpeneinlass ein Rückschlagventil ausgebildet ist. Weiters kann vorgesehen sein, dass im Dosierpumpenzylinder eine vordere Dosierpumpendichtung und eine hintere Dosierpumpendichtung ausgebildet ist. Die vordere Dosierpumpendichtung und die hintere Dosierpumpendichtung können mit dem Dosierpumpenkolben zusammenwirken. Weiters kann vorgesehen sein, dass zwischen der vorderen Dosierpumpendichtung 55 und der hinteren Dosierpumpendichtung eine Dosierpumpenspülung ausgebildet ist. Die Dosierpumpenspülung kann vorzugsweise als "Wet Cup" ausgebildet sein. Insbesondere kann vorgesehen sein, dass die Dosierpumpenspülung einen von einer Flüssigkeit durchströmten Bereich aufweist. Durch diese Dosierpumpenspülung kann ein Kristallisieren des Elektrolyts am Dosierpumpenkolben weitestgehend vermieden werden, wodurch die Lebensdauer der Dosierpumpe erhöht werden kann.

Weiters kann vorgesehen sein, dass zwischen dem Füllpumpeneinlass und dem Dosierpumpenauslass eine Verbindungsleitung angeordnet ist. Weiters kann vorgesehen sein, dass die Befüllvorrichtung einen Elektrolytvorratsbehälter aufweist. Der Elektrolytvorratsbehälter kann mit dem Dosierpumpeneinlass strömungsverbunden sein.

Ferner kann es zweckmäßig sein, wenn die Fülllanze an einer dem Behälterinnenraum zugewandten Stirnseite eine Stirnseitendichtung zur Anlage an der Batteriezelle aufweist. Dies bringt den Vorteil mit sich, dass diese Maßnahme die Fülllanze einfach die Batteriezelle angepresst werden kann und dabei eine Abdichtung zwischen der Fülllanze und der Batteriezelle erreicht werden kann. Dadurch kann das Elektrolyt einfach unter Druck in die Batteriezelle bzw. in den Batteriezelleninnenraum eingepresst werden.

Weiters kann vorgesehen sein, wenn zwischen der Fülllanze und der Fülllanzenbohrung eine Fülllanzendichtung ausgebildet ist, welche zur verschiebbaren Aufnahme der Fülllanze in der Fülllanzenbohrung dient.

Darüber hinaus kann vorgesehen sein, dass in einer Strömungsbohrung der Fülllanze ein Stopfen ausgebildet ist, welcher zum Verschließen der Strömungsbohrung dient, wobei der Stopfen mit einem Stopfenaktor zur Betätigung des Stopfens gekoppelt ist. Dies bringt den Vorteil mit sich, dass durch diese Maßnahme die Fülllanze vor dem Start des Befüllvorganges bzw. nach dem Beenden des Füllvorganges einfach verschlossen werden kann, wodurch ein unkontrolliertes Auslaufen des Elektrolyts aus der Fülllanze unterbunden werden kann. Dadurch kann die Lebensdauer der Befüllvorrichtung erhöht werden.

In einer ersten Ausführungsvariante kann vorgesehen sein, dass die Fülllanze beweglich in der Befüllvorrichtung aufgenommen ist, sodass die Fülllanze vor dem Start des Befüllvorganges an die Batteriezelle herangefahren bzw. angepresst werden kann.

In einer zweiten Ausführungsvariante kann vorgesehen sein, dass die Befülllanze ortsfest in der Befüllvorrichtung aufgenommen ist und dass im Aufnahmebehälter eine Hubeinheit ausgebildet ist. Insbesondere kann hierbei die Batteriezelle auf der Hubeinheit platziert werden und mittels der Hubeinheit angehoben und somit an die Befülllanze herangeführt werden.

Als Elektrolyt kann bevorzugt ein LiPF6-Elektrolyt Anwendung finden.

Zum besseren Verständnis der Erfindung wird diese anhand der nachfolgenden Figuren näher erläutert.

Es zeigen jeweils in stark vereinfachter, schematischer Darstellung:
- Fig. 1: ein erstes Ausführungsbeispiel einer Batteriezelle in einer perspektivischen Darstellung;
- Fig. 2: ein erstes Ausführungsbeispiel einer Befüllvorrichtung in einer perspektivischen Schnittdarstellung;
- Fig. 3: ein Ausführungsbeispiel weiterer Komponenten einer Befüllvorrichtung in einer Schnittdarstellung;
- Fig. 4a: eine Querschnittdarstellung der Befüllvorrichtung mit einer Fülllanze in einer ersten Stellung;
- Fig. 4b: eine Querschnittdarstellung der Befüllvorrichtung mit der Fülllanze in einer zweiten Stellung;
- Fig. 4c: eine Querschnittdarstellung der Befüllvorrichtung mit der Fülllanze in einer dritten Stellung;
- Fig. 5: ein zweites Ausführungsbeispiel einer Befüllvorrichtung in einer perspektivischen Schnittdarstellung;
- Fig. 6: ein drittes Ausführungsbeispiel einer Befüllvorrichtung in einer perspektivischen Schnittdarstellung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

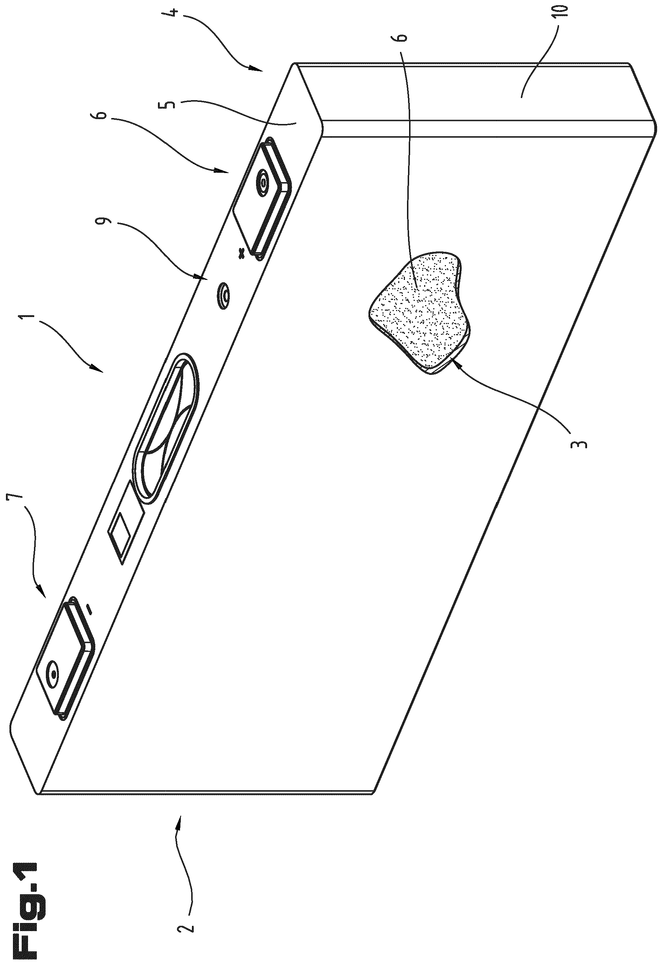

Fig. 1 zeigt ein erstes Ausführungsbeispiel der Batteriezelle 1 in einer perspektivischen Darstellung. Wie aus Fig. 1 ersichtlich, kann vorgesehen sein, dass die Batteriezelle 1 ein Batteriezellengehäuse 2 aufweist. Das Batteriezellengehäuse 2 kann einen Batteriezelleninnenraum 3 umschließen.

Insbesondere kann vorgesehen sein, dass das Batteriezellengehäuse 2 eine Gehäusebasis 10 und einen Gehäusedeckel 5 umfasst.

Insbesondere kann vorgesehen sein, dass das Batteriezellengehäuse 2 eine Gehäuseöffnung 4 aufweist. Die Gehäuseöffnung 4 kann in der Gehäusebasis 10 ausgebildet sein. Weiters kann vorgesehen sein, dass die Gehäuseöffnung 4 mittels des Gehäusedeckels 5 verschlossen ist, sodass der Batteriezelleninnenraum 3 gegenüber der Umgebung verschlossen ist. Insbesondere kann vorgesehen sein, dass die Gehäusebasis 10 und der Gehäusedeckel 5 mittels einer stoffschlüssigen Verbindung, insbesondere mittels einer Schweißverbindung, bevorzugt mittels einer Laserschweißverbindung miteinander gekoppelt sind.

Insbesondere kann vorgesehen sein, dass im Batteriezelleninnenraum 3 eine Kathode, eine Anode, ein Separator bzw. eine Vielzahl davon, angeordnet ist. Weiters kann vorgesehen sein, dass in dem Batteriezelleninnenraum 3 ein Elektrolyt 6 angeordnet ist.

Weiters kann vorgesehen sein, dass im Gehäusedeckel 5 ein positiver Anschlusspol 7 und ein negativer Anschlusspol 8 ausgebildet sind.

Weiters kann vorgesehen sein, dass im Gehäusedeckel 5 eine Befüllausnehmung 9 ausgebildet ist.

In einer alternativen, nicht dargestellten Ausführungsvariante, kann auch vorgesehen sein, dass die Befüllausnehmung 9 in der Gehäusebasis 10 angeordnet ist.

Insbesondere kann vorgesehen sein, dass die Batteriezelle 1 eine im Wesentlichen rechteckige Grundfläche aufweist und zylindrisch ausgebildet ist. Weiters kann vorgesehen sein, dass sowohl der positive Anschlusspol 7 als auch der negative Anschlusspol 8 im Gehäusedeckel 5 angeordnet sind. Eine Batteriezelle 1 mit einem derartigen Aufbau wird auch als prismatische Batteriezelle bezeichnet.

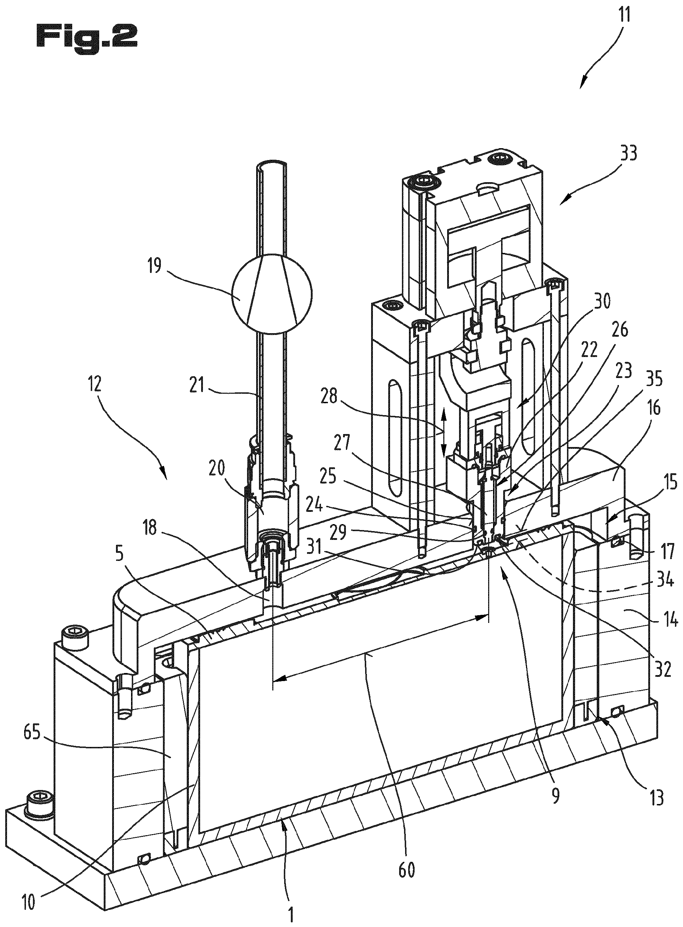

Fig. 2 zeigt in einer perspektivischen und schematischen Schnittdarstellung ein erstes Ausführungsbeispiel einer Befüllvorrichtung 11 zum Befüllen der prismatischen Batteriezelle 1 mit dem Elektrolyt 6.

Wie aus Fig. 2 ersichtlich, kann vorgesehen sein, dass die Befüllvorrichtung 11 einen Aufnahmebehälter 12 aufweist. Der Aufnahmebehälter 12 kann einen Behälterinnenraum 13 zur Aufnahme der Batteriezelle 1 aufweisen. Insbesondere kann vorgesehen sein, dass der Behälterinnenraum 13 in Draufsicht gesehen einen rechteckigen Querschnitt aufweist und sich zylindrisch in die Höhe erstreckt. Weiters kann vorgesehen sein, dass das Aufnahmevolumen des Behälterinnenraums 13 an die Außenkontur der Batteriezelle 1 angepasst ist. Weiters kann vorgesehen sein, dass im Behälterinnenraum 13 ein Distanzelement 65 angeordnet ist. Das Distanzelement 65 kann dazu dienen, um das Aufnahmevolumen des Behälterinnenraums 13 an die Außenkontur der Batteriezelle 1 anzupassen. Somit können in den Behälterinnenraum 13 unterschiedliche Distanzelemente 65 eingesetzt werden, um unterschiedlich geformte Batteriezellen 1 darin aufnehmen zu können. Insbesondere kann vorgesehen sein, dass das Distanzelement 65 aus einem Kunststoffmaterial gebildet ist.

Insbesondere kann vorgesehen sein, dass der Behälterinnenraum 13 zur Aufnahme einer einzelnen Batteriezelle 1 ausgebildet ist.

Weiters kann vorgesehen sein, dass die Innenwände des Aufnahmebehälters 12, welche den Behälterinnenraum 13 definieren, dazu ausgebildet sind, um während des Befüllvorganges vom Batteriezellengehäuse 2 der Batteriezelle 1 kontaktiert zu werden. Für den Fall, dass das Distanzelement 65 eingesetzt ist, kann vorgesehen sein, dass die Innenwände des Distanzelementes 65, dazu ausgebildet sind, um während des Befüllvorganges vom Batteriezellengehäuse 2 der Batteriezelle 1 kontaktiert zu werden.

Insbesondere kann vorgesehen sein, dass der Aufnahmebehälter 12 ein Behältergehäuse 14 aufweist. Weiters kann vorgesehen sein, dass der Behälterinnenraum 13 vom Behältergehäuse 14 umgeben ist. Weiters kann vorgesehen sein, dass das Behältergehäuse 14 eine Einsetzöffnung 15 zum Einsetzen und zur Entnahme der Batteriezelle 1 aus dem Behälterinnenraum 13 aufweist. Insbesondere kann vorgesehen sein, dass die Einsetzöffnung 15 an einer Oberseite des Behältergehäuses 14 angeordnet ist. In einer alternativen Ausführungsvariante kann auch vorgesehen sein, dass die Einsetzöffnung 15 seitlich im Behältergehäuse 14 ausgebildet ist.

Weiters kann ein Deckel 16 ausgebildet sein, welcher zum Verschließen der Einsetzöffnung 15 im Aufnahmebehälter 12 dient. Insbesondere kann vorgesehen sein, dass der Deckel 16 zum gastdichten Verschließen der Einsetzöffnung 15 dient. Als gasdicht wird definiert, wenn bei einem Unterdruck des Behälterinnenraumes 13 gegenüber dem Umgebungsdruck von 0,5 bar und verschlossenem Aufnahmebehälter 12 eine Druckänderung von weniger als 30 mbar/min stattfindet.

Weiters kann vorgesehen sein, dass zwischen dem Deckel 16 und dem Behältergehäuse 14 eine Deckeldichtung 17 angeordnet ist. Die Deckeldichtung 17 kann im verschlossenen Zustand des Deckels 16 zur gasdichten Abdichtung zwischen dem Deckel 16 und dem Behältergehäuse 14 dienen.

Weiters kann vorgesehen sein, dass im Deckel 16 eine Gasdurchtrittsöffnung 18 angeordnet ist.

Mit der Gasdurchtrittsöffnung 18 kann eine Vakuumpumpe 19 gekoppelt sein. Insbesondere kann vorgesehen sein, dass in der Gasdurchtrittsöffnung 18 ein Vakuumanschluss 20 angeordnet ist. Insbesondere kann der Vakuumanschluss 20 in die Gasdurchtrittsöffnung 18 eingeschraubt sein. Weiters kann vorgesehen sein, dass der Vakuumanschluss 20 mittels einer Vakuumverrohrung 21 mit der Vakuumpumpe 19 strömungsvserbunden ist. Insbesondere kann vorgesehen sein, dass mittels der Gasdurchtrittsöffnung 18 Gas aus dem Behälterinnenraum 13 entnommen werden kann bzw. in diesen geleitet werden kann.

Wie aus Fig. 2 weiters ersichtlich, kann vorgesehen sein, dass die Befüllvorrichtung 11 eine Fülllanze 22 umfasst. Die Fülllanze 22 kann derart am Aufnahmebehälter 12 positioniert sein, dass bei einer im Aufnahmebehälter 12 aufgenommenen Batteriezelle 1 die Fülllanze 22 an die Befüllausnehmung 9 angelegt werden kann, um mittels der Fülllanze 22 das Elektrolyt 6 in den Batteriezelleninnenraum 3 füllen zu können. Hierbei kann das Elektrolyt 6 durch die Befüllausnehmung 9 in den Batteriezelleninnenraum 3 eingebracht werden. Mit anderen Worten ausgedrückt kann die Fülllanze 22 zur Leitung des Elektrolyt 6 in den Batteriezelleninnenraum 3 dienen.

Wie aus diesem Ausführungsbeispiel ersichtlich, kann vorgesehen sein, dass im Aufnahmebehälter 12, insbesondere im Deckel 16, eine Fülllanzenbohrung 23 ausgebildet ist, in welcher die Fülllanze 22 aufgenommen ist. Insbesondere kann vorgesehen sein, dass die Fülllanze 22 verschiebbar in der Fülllanzenbohrung 23 aufgenommen ist, sodass die Fülllanze 22 an die Batteriezelle 1 heranführbar ist bzw. von dieser entfernbar ist.

Insbesondere kann vorgesehen sein, dass zwischen der Fülllanze 22 und der Fülllanzenbohrung 23 eine Fülllanzendichtung 24 ausgebildet ist, mittels welcher bei der verschiebbaren Aufnahme der Fülllanze 22 in der Fülllanzenbohrung 23 eine Abdichtung erreicht werden kann.

Insbesondere kann vorgesehen sein, dass die Fülllanzendichtung 24 an der Fülllanze 22 angeordnet ist. Die Fülllanze 22 kann hierbei eine kreiszylindrische Außenmantelfläche 25 aufweisen, in welcher die Fülllanzendichtung 24 angeordnet sein kann. Dabei kann vorgesehen sein, dass an der Außenmantelfläche 25 der Fülllanze 22 eine Nut ausgebildet ist, in welcher die Fülllanzendichtung 24 angeordnet ist.

In einer alternativen, nicht dargestellten Ausführungsvariante, kann auch vorgesehen sein, dass die Fülllanzendichtung 24 in der Fülllanzenbohrung 23 angeordnet ist. Dabei kann vorgesehen sein, dass in der Fülllanzenbohrung 23 eine Nut ausgebildet ist, in welcher die Fülllanzendichtung 24 angeordnet ist.

Weiters kann vorgesehen sein, dass in der Fülllanze 22 eine Strömungsbohrung 26 ausgebildet ist, welche zum Transport des Elektrolyts 6 dient. Insbesondere kann vorgesehen sein, dass die Fülllanze 22 zwischen der Außenmantelfläche 25 und der Strömungsbohrung 26 rohrförmig ausgebildet sein kann. Die Außenmantelfläche 25 und die Strömungsbohrung 26 können hierbei kreiszylindrisch ausgebildet sein.

Weiters kann vorgesehen sein, dass in der Strömungsbohrung 26 ein Stopfen 27 angeordnet ist, welcher zum Öffnen und zum Verschließen der Strömungsbohrung 26 dient. Insbesondere kann vorgesehen sein, dass der Stopfen 27 in einer Stopfenverschieberichtung 28 verschiebbar in der Strömungsbohrung 26 aufgenommen ist. Durch Verschieben des Stopfens 27 in Stopfenverschieberichtung 28 kann dieser zwischen einer geöffneten Stellung und einer geschlossene Stellung verschoben werden.

Weiters kann vorgesehen sein, dass im Bereich der Strömungsbohrung 26 eine Stopfendichtung 29 angeordnet ist, welche zum Abdichten zwischen dem Stopfen 27 und der Strömungsbohrung 26 dient. Insbesondere kann vorgesehen sein, dass die Stopfendichtung 29 in der Strömungsbohrung 26 aufgenommen ist.

Weiters kann vorgesehen sein, dass ein Stopfenaktor 30 ausgebildet ist, welcher zum Verschieben des Stopfens 27 in der Stopfenverschieberichtung 28 dient. Insbesondere kann vorgesehen sein, dass der Stopfenaktor 30 in Form eines Pneumatikzylinders ausgebildet ist.

Weiters kann vorgesehen sein, dass an einer Stirnseite 31 der Fülllanze 22 eine Stirnseitendichtung 32 ausgebildet ist. Die Stirnseitendichtung 32 kann zur Abdichtung der Fülllanze 22 gegenüber der Batteriezelle 1 dienen. Weiters kann vorgesehen sein, dass die Fülllanze 22 mit einem Lanzenaktor 33 gekoppelt ist, wobei die Fülllanze 22 mittels des Lanzenaktors 33 zwischen einer Anpressstellung 34 und einer Freigabestellung 35 verschiebbar sein kann. In der Anpressstellung 34 kann die Stirnseite 31 der Fülllanze 22 bzw. die Stirnseitendichtung 32 an der Batteriezelle 1 anliegen. Insbesondere kann vorgesehen sein, dass der Lanzenaktor 33 in Form eines Pneumatikzylinders ausgebildet ist. Insbesondere kann vorgesehen sein, dass mittels der Stirnseitendichtung 32 eine dichte Verbindung zwischen der Fülllanze 22 und der Batteriezelle 1 hergestellt werden kann. Dadurch kann die Strömungsbohrung 26 mit dem Batteriezelleninnenraum 3 strömungsgekoppelt werden.

Insbesondere kann vorgesehen sein, dass die Fülllanze 22 in einem Abstand 60 zur Gasdurchtrittsöffnung 18 angeordnet ist.

In einer alternativen, nicht dargestellten Ausführungsvariante kann auch vorgesehen sein, dass die Gasdurchtrittsöffnung 18 konzentrisch zur Fülllanze 22 angeordnet ist. Hierbei kann vorgesehen sein, dass die Gasdurchtrittsöffnung 18 die Fülllanze 22 ringförmig umgibt.

In der Fig. 2 ist der Aufnahmebehälter 12 in einem Längsschnitt dargestellt.

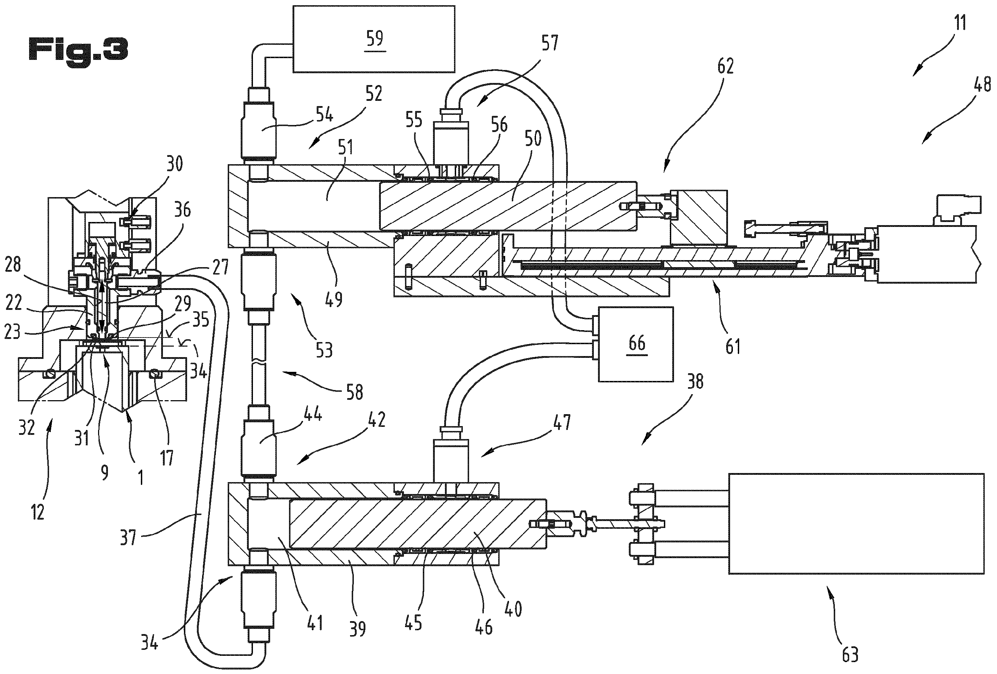

Fig. 3 zeigt weitere Komponenten der Befüllvorrichtung 11 in einer schematischen Darstellung. In der Fig. 3 ist eine weitere und gegebenenfalls für sich eigenständige Ausführungsform der Befüllvorrichtung 11 gezeigt, wobei wiederum für gleiche Teile gleiche Bezugszeichen bzw. Bauteilbezeichnungen wie in den vorangegangenen Fig. 1 und 2 verwendet werden. Um unnötige Wiederholungen zu vermeiden, wird auf die detaillierte Beschreibung in den vorangegangenen Fig. 1 und 2 hingewiesen bzw. Bezug genommen.

In der Fig. 3 ist der Aufnahmebehälter 12 in einem Querschnitt und somit um 90° zur Schnittführung der Fig. 2 versetzt dargestellt.

Wie aus Fig. 3 ersichtlich, kann vorgesehen sein, dass die Fülllanze 22 mit einem Elektrolytanschluss 36 gekoppelt ist. Der Elektrolytanschluss 36 kann mittels einer Elektrolytzuleitung 37 mit einer Füllpumpe 38 gekoppelt sein. Insbesondere kann vorgesehen sein, dass die Füllpumpe 38 als Kolbenpumpe ausgebildet ist.

Insbesondere kann vorgesehen sein, dass die Füllpumpe 38 einen Füllpumpenzylinder 39 aufweist. Im Füllpumpenzylinder 39 kann ein Füllpumpenkolben 40 verschiebbar angeordnet sein. Insbesondere kann vorgesehen sein, dass vom Füllpumpenzylinder 39 und vom Füllpumpenkolben 40 ein Elektrolytaufnahmeraum 41 begrenzt ist. Der Elektrolytaufnahmeraum 41 kann mit einem Füllpumpeneinlass 42 und einem Füllpumpenauslass 43 strömungsgekoppelt sein. Insbesondere kann vorgesehen sein, dass im Bereich des Füllpumpeneinlasses 42 ein Rückschlagventil 44 ausgebildet ist.

Weiters kann vorgesehen sein, dass im Füllpumpenzylinder 39 eine vordere Füllpumpendichtung 45 und eine hintere Füllpumpendichtung 46 ausgebildet ist. Die vordere Füllpumpendichtung 45 und die hintere Füllpumpendichtung 46 können mit dem Füllpumpenkolben 40 zusammenwirken. Weiters kann vorgesehen sein, dass zwischen der vorderen Füllpumpendichtung 45 und der hinteren Füllpumpendichtung 46 eine Füllpumpenspülung 47 ausgebildet ist. Die Füllpumpenspülung 47 kann vorzugsweise als "Wet Cup" ausgebildet sein. Insbesondere kann vorgesehen sein, dass die Füllpumpenspülung 47 einen von einer Flüssigkeit durchströmten Bereich aufweist. Durch diese Füllpumpenspülung 47 kann ein Kristallisieren des Elektrolyts 6 am Füllpumpenkolben 40 weitestgehend vermindert bzw. vermieden werden, wodurch die Lebensdauer der Füllpumpe 38 erhöht werden kann.

Weiters kann vorgesehen sein, dass der Füllpumpenkolben 40 mit einem Füllpumpenaktor 63 gekoppelt ist. Mittels des Füllpumpenaktors 63 kann der Füllpumpenkolben 40 verschoben werden, wodurch das Volumen des Elektrolytaufnahmeraums 41 angepasst werden kann. Insbesondere kann vorgesehen sein, dass der Füllpumpenaktor 63 in Form eines Pneumatikzylinders ausgebildet ist.

Weiters kann vorgesehen sein, dass die Befüllvorrichtung 11 eine Dosierpumpe 48 aufweist.

Insbesondere kann vorgesehen sein, dass die Dosierpumpe 48 einen Dosierpumpenzylinder 49 aufweist. Im Dosierpumpenzylinder 49 kann ein Dosierpumpenkolben 50 verschiebbar angeordnet sein. Insbesondere kann vorgesehen sein, dass vom Dosierpumpenzylinder 49 und vom Dosierpumpenkolben 50 ein Elektrolytaufnahmeraum 51 begrenzt ist. Der Elektrolytaufnahmeraum 51 kann mit einem Dosierpumpeneinlass 52 und einem Dosierpumpenauslass 53 strömungsgekoppelt sein. Insbesondere kann vorgesehen sein, dass im Bereich des Dosierpumpeneinlass 52 ein Rückschlagventil 54 ausgebildet ist.

Weiters kann vorgesehen sein, dass im Dosierpumpenzylinder 49 eine vordere Dosierpumpendichtung 55 und eine hintere Dosierpumpendichtung 56 ausgebildet ist. Die vordere Dosierpumpendichtung 55 und die hintere Dosierpumpendichtung 56 können mit dem Dosierpumpenkolben 50 zusammenwirken. Weiters kann vorgesehen sein, dass zwischen der vorderen Dosierpumpendichtung 55 und der hinteren Dosierpumpendichtung 56 eine Dosierpumpenspülung 57 ausgebildet ist. Die Dosierpumpenspülung 57 kann vorzugsweise als "Wet Cup" ausgebildet sein. Insbesondere kann vorgesehen sein, dass die Dosierpumpenspülung 57 einen von einer Flüssigkeit durchströmten Bereich aufweist. Durch diese Dosierpumpenspülung 57 kann ein Kristallisieren des Elektrolyts 6 am Dosierpumpenkolben 50 weitestgehend vermieden bzw. vermindert werden, wodurch die Lebensdauer der Dosierpumpe 48 erhöht werden kann.

In einer alternativen Ausführung kann vorgesehen sein, dass die Füllpumpenspülung 47 und die Dosierpumpenspülung 57 mittels einer Verschlauchung mit einer Spülpumpe 66 gekoppelt sind. Die Spülpumpe 66 kann zum Pumpen eines Spülfluids, wie etwa Wasser, dienen.

Weiters kann vorgesehen sein, dass der Dosierpumpenkolben 50 mit einem Dosierpumpenaktor 62 gekoppelt ist. Mittels des Dosierpumpenaktors 62 kann der Dosierpumpenkolben 50 verschoben werden, wodurch das Volumen des Elektrolytaufnahmeraums 51 angepasst werden kann. Insbesondere kann vorgesehen sein, dass der Dosierpumpenaktor 62 in Form eines Pneumatikzylinders ausgebildet ist. Weiters kann vorgesehen sein, dass der komplette Dosierpumpenaktor 62 mittels einer Verstelleinheit 61 verschiebbar ist. Somit kann die Menge des Elektrolyts 6 im Elektrolytaufnahmeraum 51 verändert werden. Der Dosierpumpenaktor 62 in Form eines Pneumatikzylinders kann hierbei auf Block zwischen den Endanschlägen bewegt werden.

Weiters kann vorgesehen sein, dass zwischen dem Füllpumpeneinlass 42 und dem Dosierpumpenauslass 53 eine Verbindungsleitung 58 angeordnet ist. Weiters kann vorgesehen sein, dass die Befüllvorrichtung 11 einen Elektrolytvorratsbehälter 59 aufweist. Der Elektrolytvorratsbehälter 59 kann mit dem Dosierpumpeneinlass 52 strömungsverbunden sein.

Die Füllpumpe 38 und die Dosierpumpe 48 sind in der Darstellung nach Fig. 3 übereinander dargestellt. In einer weiteren Ausführung ist es auch denkbar, dass die Füllpumpe 38 und die Dosierpumpe 48 nebeneinander angeordnet sind. Auch die der Füllpumpeneinlass 42 und der Dosierpumpenauslass 53 bzw. der Dosierpumpeneinlass 52 und der Dosierpumpenauslass 53 können in einer vertikalen Ebene angeordnet sein.

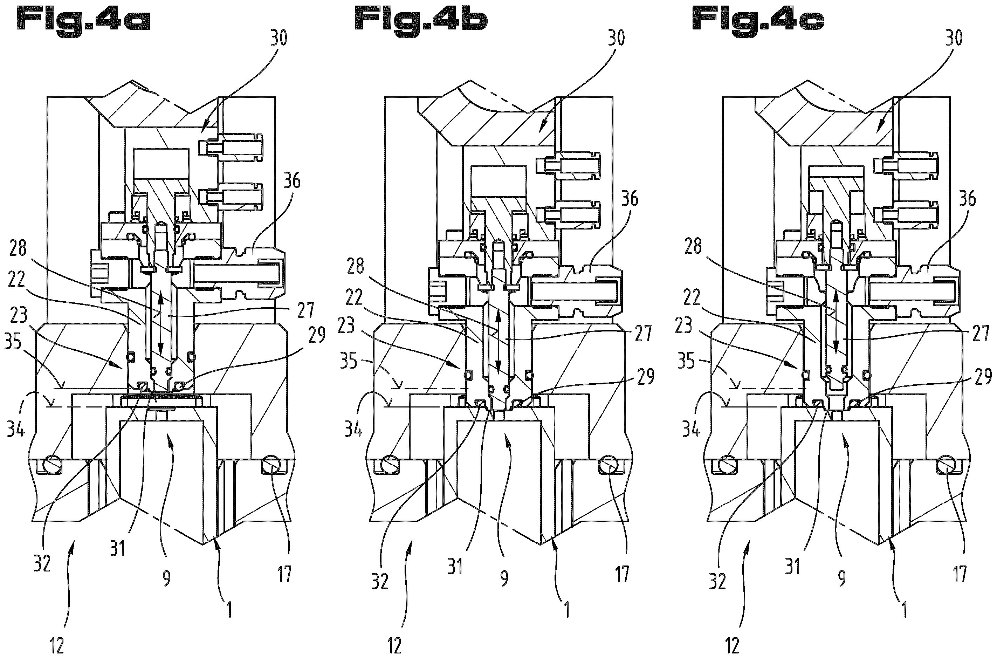

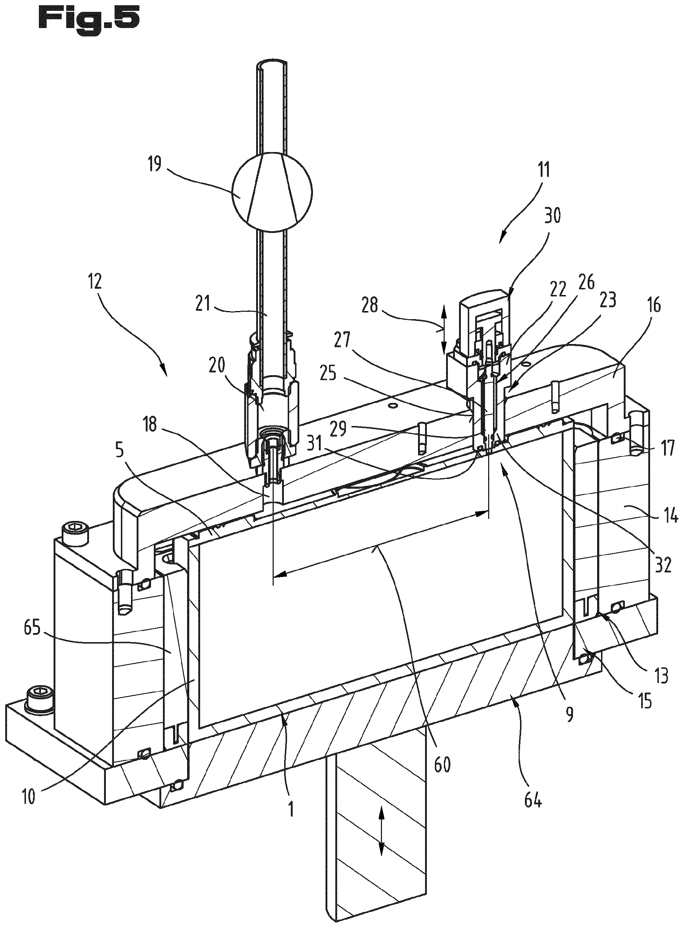

Anhand der Fig. 4a, 4b und 4c bzw. anhand einer zugehörigen Druckkurve gemäß der Fig. 5 wird nun in weiterer Folge ein möglicher Verfahrensablauf zum Befüllen einer prismatischen Batteriezelle mit Elektrolyt 6 beschrieben, wobei wiederum für gleiche Teile gleiche Bezugszeichen bzw. Bauteilbezeichnungen wie in den vorangegangenen Fig. 1 bis 3 verwendet werden. Um unnötige Wiederholungen zu vermeiden, wird auf die detaillierte Beschreibung in den vorangegangenen Fig. 1 bis 3 hingewiesen bzw. Bezug genommen. In den Fig. 4a, 4b und 4c ist der Aufnahmebehälter 12 in einem Querschnitt im Bereich der Fülllanze 22 dargestellt, wobei sich die Fülllanze 22 in den Darstellungen der 4a, 4b und 4c in unterschiedlichen Stellungen befindet.

In einem ersten Verfahrensschritt kann vorgesehen sein, dass die Batteriezelle 1 in die Befüllvorrichtung 11 eingesetzt wird, wobei der Deckel 16 des Aufnahmebehälters 12 offen sein kann und die Batteriezelle 1 durch die Einsetzöffnung 15 in den Aufnahmebehälter 12 eingesetzt wird. Die Batteriezelle 1 kann hierbei so im Aufnahmebehälter 12 positioniert werden, dass bei geschlossenem Aufnahmebehälter 12 die Befüllausnehmung 9 im Bereich der Fülllanze 22 positioniert ist.

In einem weiteren Verfahrensschritt kann der Deckel 16 so an der Einsetzöffnung 15 positioniert werden, dass der Behälterinnenraum 13 luftdicht zur Umgebung abgeschlossen ist. Hierbei kann sich eine Positionierung, wie diese in Fig. 4a dargestellt ist, ergeben, wobei sich die Fülllanze 22 in der Freigabestellung 35 befinden kann.

Gleichzeitig kann sich der Stopfen 27 in einer geschlossenen Stellung befinden, wobei die Stopfendichtung 29 den Stopfen 27 zur Fülllanzenbohrung 23 abdichten kann.

In einem weiteren Verfahrensschritt kann mittels der Vakuumpumpe 19 über den Vakuumanschluss 20 der Absolutdruck im Behälterinnenraum 13, auch als Behälterinnenraumdruck bezeichnet, abgesenkt werden. Beispielsweise kann der Behälterinnenraumdruck auf einen Wert zwischen 40 mbar und 80 mbar abgesenkt werden. Dieses Absenken des Behälterinnenraumdruckes kann in etwa ab Sekunde 5 bis Sekunde 10 erfolgen.

Durch die Befüllausnehmung 9 im Batteriezellengehäuse 2 stellt sich dieser Absolutdruck bzw. Behälterinnenraumdruck nicht nur außerhalb des Batteriezellengehäuses 2 ein, sondern auch im Batteriezelleninnenraum 3. Dies wird dadurch ermöglicht, dass in der Stellung nach Fig. 4 die Fülllanze 22 vom Batteriezellengehäuse 2 abgehoben ist und somit eine Strömungsverbindung zwischen dem Batteriezelleninnenraum 3 und dem Behälterinnenraum 13 besteht.

In einem anschließenden Verfahrensschritt kann, wie dies aus Fig. 4b ersichtlich ist, die Fülllanze 22 an das Batteriezellengehäuse 2 angedrückt werden, sodass die Stirnseite 31 der Fülllanze 22, insbesondere die Stirnseitendichtung 32 am Batteriezellengehäuse 2 anliegt. Dies kann beispielsweise dadurch erreicht werden, dass die Fülllanze 22 mittels des Lanzenaktors 33 in Richtung zum Batteriezellengehäuse 2 verschoben wird.

In dieser Stellung, wie sie in Fig. 4b dargestellt ist, ist der Batteriezelleninnenraum 3 zum Behälterinnenraum 13 mittels der Fülllanze 22 luftdicht abgedichtet.

In einem weiteren Verfahrensschritt kann der Behälterinnenraumdruck wieder angehoben werden, insbesondere zur Gänze an den Umgebungsdruck angepasst werden. Dieses Anheben des Behälterinnenraumdruckes kann in etwa ab Sekunde 30 erfolgen.

Somit kann sich ein Absolutdruck von etwa 1013 mbar einstellen. Durch die Abdichtung des Batteriezelleninnenraumes 3 kann der zuvor angelegte verminderte Absolutdruck im Batteriezelleninnenraum 3 bestehen bleiben. Ab ca. Sekunde 30 kann somit der Absolutdruck im Batteriezelleninnenraum 3 geringer sein, als der Behälterinnenraumdruck.

In einem anschließenden Verfahrensschritt kann, entsprechend der Darstellung nach Fig. 4c, der Stopfen 27 mittels des Stopfenaktors 30 in der Stopfenverschieberichtung 28 in seine geöffnete Stellung verschoben werden, sodass durch die Fülllanzenbohrung 23 der Fülllanze 22 das Elektrolyt 6 in den Batteriezelleninnenraum 3 geleitet werden kann. Dieser Zeitpunkt kann als Start Füllvorgang bezeichnet werden.

Insbesondere kann vorgesehen sein, dass das Elektrolyt 6 mit einem Absolutdruck, auch Elektrolytdruck bezeichnet, zwischen 9 bar und 10,5 bar in den Batteriezelleninnenraum 3 eingepresst wird, wobei der Elektrolytdruck während des Füllvorganges mittels der Füllpumpe 38 auf diesen Wert angehoben werden kann. Insbesondere kann der Elektrolytdruck bei Öffnen des Stopfens 27 kurzzeitig auf den vorherrschenden Druck im vakuumierten Batteriezelleninnenraum 3 abfallen.

Gleichzeitig kann während des Befüllvorganges der Behälterinnenraumdruck im Behälterinnenraum 13 von Umgebungsdruck, sprich 1013 mbar gleichzeitig mit dem Elektrolytdruck und somit dem sich im Batteriezelleninnenraum 3 einstellenden Absolutdruck angehoben werden, sodass der Behälterinnenraumdruck während des Befüllvorganges geringfügig niedriger ist, als der Elektrolytdruck. Insbesondere kann vorgesehen sein, dass hierbei die Druckdifferenz zwischen 2 mbar und 800 mbar, insbesondere zwischen 100 mbar und 300mbar, bevorzugt zwischen 110 mbar und 150 mbar beträgt.

Zum Anheben des Behälterinnenraumdruckes kann Umgebungsluft in den Behälterinnenraum 13 eingebracht werden.

In einer alternativen Ausführungsvariante ist es auch denkbar, dass zum Anheben des Behälterinnenraumdruckes ein Prozessgas in den Behälterinnenraum 13 eingebracht wird. Insbesondere kann Stickstoff als Prozessgas dienen. Weiters kann Trockenluft als Prozessgas dienen.

Da das Elektrolyt 6 während des Befüllvorganges in den Batteriezelleninnenraum 3 eingebracht wird, ist der Elektrolytdruck des im Batteriezelleninnenraum 3 befindlichen Elektrolyts 6 gleich groß wie der Absolutdruck im Batteriezelleninnenraum 3.

Das Zuführen des Elektrolyts 6 mittels der Füllpumpe 38 kann hierbei folgendermaßen erfolgen. In einem ersten Verfahrensschritt kann das Elektrolyt 6 mittels der Dosierpumpe 48 aus dem Elektrolytvorratsbehälter 59 herausgezogen werden. Dies geschieht dadurch, dass der Dosierpumpenkolben 50 von einer nach vor geschobenen Position in eine hintere Anschlagposition verschoben wird, wobei der Elektrolytaufnahmeraum 51 vergrößert wird und dabei das Elektrolyt 6 in den Elektrolytaufnahmeraum 51 aufgenommen wird. Hierbei ist es denkbar, dass der Dosierpumpenkolben 50 mittels des Dosierpumpenaktors 62, insbesondere mittels des Pneumatikzylinders, in den hinteren Anschlag verschoben wird. Durch Verschiebung des hinteren Anschlages, insbesondere des kompletten Pneumatikzylinders mittels der Verstelleinheit 61 kann die maximale Füllmenge im Elektrolytaufnahmeraum 51 definiert bzw. verändert werden.

In einem weiteren Verfahrensschritt kann der Dosierpumpenkolben 50 wieder in seine vordere Position gedrückt werden, wobei das im Elektrolytaufnahmeraum 51 befindliche Elektrolyt 6 durch Wirkung des Rückschlagventils 54 nicht mehr in den Elektrolytvorratsbehälter 59 zurückströmen kann, sondern durch den Dosierpumpenauslass 53 und den Füllpumpeneinlass 42 in den Elektrolytaufnahmeraum 41 der Füllpumpe 38 gedrückt wird.

Der Füllpumpenaktor 63 kann hierbei deaktiviert sein, sodass der Füllpumpenkolben 40 durch den Füllvorgang des Elektrolytaufnahmeraums 41 der Füllpumpe 38 frei in eine hintere Position gedrückt wird. Insbesondere kann der Füllpumpenkolben 40 hierbei vom Füllpumpenaktor 63, insbesondere dem Pneumatikzylinder nicht kraftbeaufschlagt sein, wodurch der Füllpumpenkolben 40 durch den Füllvorgang des Elektrolytaufnahmeraums 41 der Füllpumpe 38 in die hintere Position gedrückt werden kann.

Die Verfahrensschritte zur Füllung der Füllpumpe 38 können hierbei parallel zu den Verfahrensschritten, welche zu den Fig. 4a und 4b beschrieben wurden erfolgen, wobei sich dabei der Stopfen 27 in der Geschlossenstellung befinden kann.

Beim eigentlichen Befüllvorgang mit geöffnetem Stopfen 27 gemäß der Darstellung nach Fig. 4c kann der Füllkolbenpumpenaktor 63 den Füllpumpenkolben 40 nach vorne drücken, wobei das Elektrolyt 6 durch das Rückschlagventil 44 nicht zurück zur Dosierpumpe 48 gelangen kann, sondern über den Füllpumpenauslass 43 und die Fülllanze 22 in den Batteriezelleninnenraum 3 gedrückt wird.

Dies kann so lange erfolgen, bis der Batteriezelleninnenraum 3 zur Gänze mit Elektrolyt 6 befüllt wird. Dieser Zeitpunkt kann als Füllende bezeichnet werden.

Nach dem Füllende, insbesondere wenn der Batteriezelleninnenraum 3 zur Gänze mit Elektrolyt 6 befüllt ist, kann der Absolutdruck im Elektrolyt 6 bzw. in der Fülllanze 22 für einen gewissen Zeitraum aufrecht erhalten werden, sodass das Elektrolyt 6 in sämtliche Hohlräume im Batteriezelleninnenraum eindringen kann.

Dieser Zeitraum kann zwischen 100 sec und 800 sec, insbesondere zwischen 150 sec und 600 sec, bevorzugt zwischen 200 sec und 300 sec betragen. Während diesem Zeitraum kann der Absolutdruck im Elektrolyt 6 geringfügig abfallen. Der Druckabfall im Elektrolyt 6 kann hierbei so gering sein, dass der Absolutdruck im Behälterinnenraum 13 nach wie vor geringer ist als der Absolutdruck des Elektrolyts 6.

Nach Beendigung dieser Wartezeit kann der Stopfen 27 wieder geschlossen werden und die Fülllanze 22 vom Batteriezellengehäuse 2 abgehoben werden. In einem anschließenden Verfahrensschritt kann der Behälterinnenraumdruck im Behälterinnenraum 13 wieder an den Umgebungsdruck angeglichen werden, indem der Behälterinnenraum 13 mit Luft gefüllt wird. Dieser Zeitpunkt kann als Start Druckausgleich bezeichnet werden.

In einem anschließenden Verfahrensschritt kann der Deckel 16 wieder vom Behältergehäuse 14 abgenommen werden bzw. geöffnet werden, sodass die Einsetzöffnung 15 zur Entnahme der gefüllten Batteriezelle 1 und zum Einsetzen einer neuen Batteriezelle 1 verfügbar ist. Weiters kann vorgesehen sein, dass vor dem Einsetzen der neuen Batteriezelle 1 die Fülllanze 22 im Bereich des Behälterinnenraumes 13 abgereinigt wird. Dadurch kann die Lebensdauer der Befüllvorrichtung 11 erhöht werden.

In der Fig. 5 ist eine weitere und gegebenenfalls für sich eigenständige Ausführungsform der Befüllvorrichtung 11 gezeigt, wobei wiederum für gleiche Teile gleiche Bezugszeichen bzw. Bauteilbezeichnungen wie in den vorangegangenen Fig. 1 bis 4 verwendet werden. Um unnötige Wiederholungen zu vermeiden, wird auf die detaillierte Beschreibung in den vorangegangenen Fig. 1 bis 4 hingewiesen bzw. Bezug genommen.

In einer alternativen Ausführungsvariante der Befüllvorrichtung 11 gemäß der Fig. 5 kann die Fülllanze 22 starr am Aufnahmebehälter 12 aufgenommen sein. Hierbei kann vorgesehen sein, dass die Batteriezelle 1 auf einer Hubvorrichtung 64 platziert wird, wobei die Batteriezelle 1 mittels der Hubvorrichtung 64 an die Fülllanze 22 herangeschoben werden kann.

Zwischen der Hubvorrichtung 64 und dem Behältergehäuse 14 kann eine Dichtung angeordnet sein. Somit kann die Hubvorrichtung 64 gleichzeitig als Deckel 16 dienen. Mittels der Hubvorrichtung 64 kann die Batteriezelle 1 somit komplett aus dem Aufnahmebehälter 12 entnommen werden. Insbesondere kann vorgesehen sein, dass die Hubvorrichtung 64 gestuft ausgebildet ist und einen Absatz aufweist. Die Dichtung kann somit als Pressdichtung zwischen dem Absatz der Hubvorrichtung 64 und dem Aufnahmebehälter 12 ausgebildet sein. Um unterschiedlich hohe Batteriezellen 1 aufnehmen zu können, kann vorgesehen sein, dass die Hubvorrichtung 64 entsprechend angepasst ist, oder dass zwischen der Hubvorrichtung 64 und der Batteriezelle 1 eine Unterlage angeordnet ist.

Somit kann ein Heranführen der Fülllanze 22 und der Batteriezelle 1 aneinander erreicht werden, ohne dabei die Fülllanze 22 verschieben zu können. Dies kann den Vorteil mit sich bringen, dass die Notwendigkeit einer eine Verschiebung ermöglichende Fülllanzendichtung 24 zur Abdichtung der Fülllanze 22 relativ zur Fülllanzenbohrung 23 vermieden werden kann. Anstatt dessen kann die Fülllanze 22 mittels einer stoffschlüssigen Verbindung, wie etwa einer Schweißverbindung, fest im Aufnahmebehälter 12 positioniert sein. Alternativ kann die Fülllanze 22 auch mittels einer Schraubverbindung im Aufnahmebehälter 12 positioniert sein. Eine hierbei etwaige notwendige Dichtung zwischen der Fülllanze 22 und dem Aufnahmebehälter 12 kann eine einfache Pressdichtung sein.

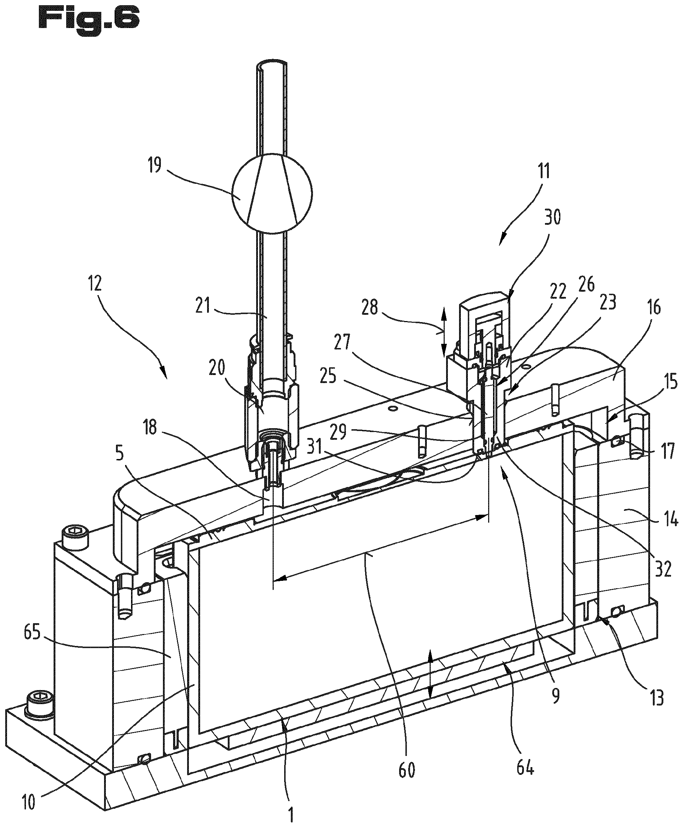

In der Fig. 6 ist eine weitere und gegebenenfalls für sich eigenständige Ausführungsform der Befüllvorrichtung 11 gezeigt, wobei wiederum für gleiche Teile gleiche Bezugszeichen bzw. Bauteilbezeichnungen wie in den vorangegangenen Fig. 1 bis 5 verwendet werden. Um unnötige Wiederholungen zu vermeiden, wird auf die detaillierte Beschreibung in den vorangegangenen Fig. 1 bis 5 hingewiesen bzw. Bezug genommen.

Im Gegensatz zur Darstellung der Fig. 5 kann in der Ausführung gemäß der Fig. 6 die Hubvorrichtung 64 innerhalb des Aufnahmebehälters 12 angeordnet sein.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Batteriezelle | 32 | Stirnseitendichtung |
| 2 | Batteriezellengehäuse | 33 | Lanzenaktor |
| 3 | Batteriezelleninnenraum | 34 | Anpressstellung |
| 4 | Gehäuseöffnung | 35 | Freigabestellung |
| 5 | Gehäusedeckel | 36 | Elektrolytanschluss |
| 6 | Elektrolyt | 37 | Elektrolytzuleitung |
| 7 | positiver Anschlusspol | 38 | Füllpumpe |
| 8 | negativer Anschlusspol | 39 | Füllpumpenzylinder |
| 9 | Befüllausnehmung | 40 | Füllpumpenkolben |
| 10 | Gehäusebasis | 41 | Elektrolytaufnahmeraum |
| 11 | Befüllvorrichtung | 42 | Füllpumpeneinlass |
| 12 | Aufnahmebehälter | 43 | Füllpumpenauslass |
| 13 | Behälterinnenraum | 44 | Rückschlagventil |
| 14 | Behältergehäuse | 45 | vordere Füllpumpendichtung |
| 15 | Einsetzöffnung | 46 | hintere Füllpumpendichtung |
| 16 | Deckel | 47 | Füllpumpenspülung |
| 17 | Deckeldichtung | 48 | Dosierpumpe |
| 18 | Gasdurchtrittsöffnung | 49 | Dosierpumpenzylinder |
| 19 | Vakuumpumpe | 50 | Dosierpumpenkolben |
| 20 | Vakuumanschluss | 51 | Elektrolytaufnahmeraum |
| 21 | Vakuumverrohrung | 52 | Dosierpumpeneinlass |
| 22 | Fülllanze | 53 | Dosierpumpenauslass |
| 23 | Fülllanzenbohrung | 54 | Rückschlagventil |
| 24 | Fülllanzendichtung | 55 | vordere Dosierpumpendichtung |
| 25 | Außenmantelfläche | 56 | hintere Dosierpumpendichtung |
| 26 | Strömungsbohrung | 57 | Dosierpumpenspülung |
| 27 | Stopfen | 58 | Verbindungsleitung |
| 28 | Stopfenverschieberichtung | 59 | Elektrolytvorratsbehälter |
| 29 | Stopfendichtung | 60 | Abstand |
| 30 | Stopfenaktor | 61 | Verstelleinheit |
| 31 | Stirnseite Fülllanze | 62 | Dosierpumpenaktor |
| 63 | Füllpumpenaktor | | |
| 64 | Hubvorrichtung | | |
| 65 | Distanzelement | | |
| 66 | Spülpumpe | | |

## Patentansprüche

1. Verfahren zum Befüllen einer prismatischen Batteriezelle (1) mit Elektrolyt (6), das Verfahren umfassend die Verfahrensschritte:
- Bereitstellen einer Befüllvorrichtung (11) umfassend:
+ einen Aufnahmebehälter (12) mit einem Behälterinnenraum (13) zur Aufnahme der Batteriezelle (1), wobei der Behälterinnenraum (13) von einem Behältergehäuse (14) umgeben ist, welches zumindest eine Einsetzöffnung (15) zum Einsetzen und zur Entnahme der Batteriezelle (1) aus dem Behälterinnenraum (13) aufweist;
+ einen Deckel (16) zum gasdichten Verschließen der Einsetzöffnung (15) im Aufnahmebehälter (12);
+ eine im Behältergehäuse (14) oder im Deckel (16) angeordnete Gasdurchtrittsöffnung (18);
+ eine Vakuumpumpe (19), welche mit der Gasdurchtrittsöffnung (18) strömungsverbunden ist;
+ eine im Behältergehäuse (14) oder im Deckel (16) angeordnete Fülllanze (22) zum Einbringen eines Elektrolyt (6) in das Innere der Batteriezelle (1), wobei die Fülllanze (22) separat zur Gasdurchtrittsöffnung (18) ausgebildet ist;
- Bereitstellen der Batteriezelle (1) mit einem Batteriezellengehäuse (2) und einem darin ausgebildeten Batteriezelleninnenraum (3), sowie einer im Batteriezellengehäuse (2) angeordneten Befüllausnehmung (9);
- Einsetzen der Batteriezelle (1) in den Behälterinnenraum (13) des Aufnahmebehälters (12) durch die Einsetzöffnung (15), wobei die Batteriezelle (1) so im Behälterinnenraum (13) positioniert wird, dass die Befüllausnehmung (9) der Batteriezelle (1) im Bereich der Fülllanze (22) liegt;
- Gasdichtes Verschließen der Einsetzöffnung (15) des Aufnahmebehälters (12) mittels des Deckels (16);
- Herstellen eines Behälterinnenraumdruckes im Behälterinnenraum (13), welcher geringer ist als der Umgebungsdruck, mittels der Vakuumpumpe (19), wobei sich der Batteriezelleninnenraumdruck im Batteriezelleninnenraum (3) an den Behälterinnenraumdruck anpasst;
- Heranführen und anpressen der Fülllanze (22) und der Befüllausnehmung (9) der Batteriezelle (1) zueinander, wobei der Batteriezelleninnenraum (3) der Batteriezelle (1) mittels der Fülllanze (22) gasdicht zum Behälterinnenraum (13) abgeschlossen wird;
- Einbringen einer vorbestimmten Menge des Elektrolyt (6) in den Batteriezelleninnenraum (3) mittels der Fülllanze (22).

2. Verfahren nach Anspruch 1, **dadurch gekennzeichnet, dass** beim Herstellen des Behälterinnenraumdruckes im Behälterinnenraum (13), welcher geringer ist als der Umgebungsdruck, der Behälterinnenraumdruck auf einen Wert zwischen 20mbar und 500mbar, insbesondere zwischen 30mbar und 300mbar, bevorzugt zwischen 45mbar und 55mbar gebracht wird.

3. Verfahren nach Anspruch 1 oder 2, **dadurch gekennzeichnet, dass** vor dem Einbringen einer vorbestimmten Menge des Elektrolyt (6) in den Batteriezelleninnenraum (3) folgender Verfahrensschritt durchgeführt wird:
- Erhöhen des Behälterinnenraumdruckes oder kompletter Druckausgleich des Behälterinnenraumdruckes mit dem Umgebungsdruck, wobei durch den gasdichten Abschluss des Batteriezelleninnenraumes (3) der Batteriezelleninnenraumdruck geringer ist als der Behälterinnenraumdruck.

4. Verfahren nach einem der vorhergehenden Ansprüche, **dadurch gekennzeichnet, dass** der Behälterinnenraum (13) während des Befüllvorganges mit einem Prozessgas beaufschlagt wird, wobei das Beaufschlagen des Behälterinnenraumes (13) mit dem Prozessgas erst erfolgt, wenn die Fülllanze (22) an die Befüllausnehmung (9) angepresst ist.

5. Verfahren nach einem der vorhergehenden Ansprüche, **dadurch gekennzeichnet, dass** während des Einbringens des Elektrolyt (6) in den Batteriezelleninnenraum (3) der Behälterinnenraumdruck gegenüber dem Umgebungsdruck erhöht wird.

6. Verfahren nach Anspruch 5, **dadurch gekennzeichnet, dass** der Behälterinnenraumdruck auf einen Wert zwischen 1200mbar und 6000mbar, insbesondere zwischen 1250mbar und 4000mbar, bevorzugt zwischen 1300mbar und 3000mbar erhöht wird.

7. Verfahren nach einem der vorhergehenden Ansprüche, **dadurch gekennzeichnet, dass** beim Einbringen des Elektrolyt (6) in den Batteriezelleninnenraum (3), das Elektrolyt (6) in den Batteriezelleninnenraum (3) mit einem Befülldruck zwischen 2000mbar und 13000mbar, insbesondere zwischen 6000mbar und 12000mbar, bevorzugt zwischen 8000mbar und 10000mbar eingebracht wird.

8. Verfahren nach einem der vorhergehenden Ansprüche, **dadurch gekennzeichnet, dass** beim Einbringen des Elektrolyt (6) in den Batteriezelleninnenraum (3), der Befülldruck zwischen 20mbar und 10000mbar, insbesondere zwischen 40mbar und 6000mbar, bevorzugt zwischen 500mbar und 2000mbar höher ist, als der Behälterinnenraumdruck.

9. Verfahren nach einem der vorhergehenden Ansprüche, **dadurch gekennzeichnet, dass** während des Befüllvorganges der Behälterinnenraumdruck laufend an den Befülldruck angepasst wird.

10. Verfahren nach einem der vorhergehenden Ansprüche, **dadurch gekennzeichnet, dass** nach Beendigung des Befüllvorganges die Fülllanze (22) gereinigt wird, bevor ein neuer Befüllzyklus gestartet wird.

11. Verfahren nach einem der vorhergehenden Ansprüche, **dadurch gekennzeichnet, dass** die vorbestimmte Menge des Elektrolyt (6) mittels einer Füllpumpe (38) in den Batteriezelleninnenraum (3) eingebracht wird, wobei die Dosierung der vorbestimmten Menge des Elektrolyt (6) mittels einer Dosierpumpe (48) erfolgt, welche die vorbestimmte Menge des Elektrolyt (6) in die Füllpumpe (38) hineindosiert.

12. Befüllvorrichtung (11) zum Befüllen einer prismatischen Batteriezelle (1) mit einem Elektrolyt (6), insbesondere zum Durchführen des Verfahrens nach einem der vorhergehenden Ansprüche, die Befüllvorrichtung (11) umfassend:
- einen Aufnahmebehälter (12) mit einem Behälterinnenraum (13) zur Aufnahme der Batteriezelle (1), wobei der Behälterinnenraum (13) von einem Behältergehäuse (14) umgeben ist, welches zumindest eine Einsetzöffnung (15) zum Einsetzen und zur Entnahme der Batteriezelle (1) aus dem Behälterinnenraum (13) aufweist;
- einen Deckel (16) zum gasdichten Verschließen der Einsetzöffnung (15) im Aufnahmebehälter (12);
- eine im Behältergehäuse (14) oder im Deckel (16) angeordnete Gasdurchtrittsöffnung (18);
- eine Vakuumpumpe (19), welche mit der Gasdurchtrittsöffnung (18) strömungsverbunden ist;
- eine im Behältergehäuse (14) oder im Deckel (16) angeordnete Fülllanze (22) zum Einbringen eines Elektrolyt (6) in das Innere der Batteriezelle (1), wobei die Fülllanze (22) separat zur Gasdurchtrittsöffnung (18) ausgebildet ist.

13. Befüllvorrichtung (11) nach Anspruch 12, **dadurch gekennzeichnet, dass** die Fülllanze (22) mit einer Füllpumpe (38) gekoppelt ist, welche zum Einbringen einer vorbestimmten Menge des Elektrolyt (6) in den Batteriezelleninnenraum (3) ausgebildet ist und dass eine Dosierpumpe (48) ausgebildet ist, welche zur Dosierung der vorbestimmten Menge des Elektrolyt (6) in die Füllpumpe (38) dient.

14. Befüllvorrichtung (11) nach Anspruch 12 oder 13, **dadurch gekennzeichnet, dass** die Fülllanze (22) an einer dem Behälterinnenraum (13) zugewandten Stirnseite (31) eine Stirnseitendichtung (32) zur Anlage an der Batteriezelle (1) aufweist.

15. Befüllvorrichtung (11) nach Anspruch einem der Ansprüche 12 bis 14, **dadurch gekennzeichnet, dass** in einer Strömungsbohrung (26) der Fülllanze (22) ein Stopfen (27) ausgebildet ist, welcher zum Verschließen der Strömungsbohrung (26) dient, wobei der Stopfen (27) mit einem Stopfenaktor (30) zur Betätigung des Stopfens (27) gekoppelt ist.
